# EUROPEAN PATENT APPLICATION

(11) **EP 2 713 479 A2**
(43) Date of publication of application: **02.04.2014**
(21) Application number: 13172322.3
(22) Date of filing: 17.06.2013
(51) Int. Cl.: H02K 1/14

(54) **Split stator core of a rotary electric machine and corresponding manufacturing method**

(30) Priority: 28.09.2012 JP 2012217267
(71) Applicant: Kabushiki Kaisha Yaskawa Denki, Kitakyushu-Shi, Fukuoka 806-0004 (JP)
(72) Inventor: Irie, Kazuaki, Kitakyushu-shi, Fukuoka 806-0004 (JP)
(74) Representative: Viering, Jentschura & Partner Patent- und Rechtsanwälte

(57) **Abstract**

A stator core is formed by laminating a plurality of annular core plates one on top of another. The stator core includes a cylindrical yoke and a plurality of radially protruding teeth arranged at a specified interval along a circumferential direction of the yoke. Each of the core plates includes a plurality of annularly-arranged split cores each having a yoke portion forming the yoke and a tooth portion protruding from the yoke portion and forming the teeth. The yoke portion includes a first yoke section and a second yoke section extending different lengths at opposite lateral sides of the tooth portion.

## Description

### BACKGROUND OF THE INVENTION

### Field of the Invention

Embodiments disclosed herein relate to a stator core, a split core block, a stator manufacturing method, and a rotary electric machine.

### Description of the Related Art

There is conventionally available a stator core formed of a plurality of annular core plates laminated one on top of another. The stator core includes a cylindrical yoke and a plurality of teeth arranged at a specified interval along a circumferential direction of the yoke. The teeth protrude inward from the yoke.

As the stator core of this laminated structure, there is known a stator core in which core plates are formed by interconnecting a plurality of split cores each having a tooth portion through joint portions formed by caulking or the like (see, e.g., Japanese Patent Application Publication No. 2006-311738).

Use of these core plates makes it possible to perform winding in a state where the core plates are linearly opened through the joint portions. This helps enhance the efficiency of winding work.

In the configuration disclosed in Japanese Patent Application Publication No. 2006-311738, however, iron loss is increased in the stator core because the connection portions are formed by caulking.

### SUMMARY OF THE INVENTION

In view of the above, embodiments disclosed herein provide a stator core capable of reducing iron loss, a split core block, a stator manufacturing method, and a rotary electric machine.

In accordance with an aspect of the present invention, there is provided a stator core formed by laminating a plurality of annular core plates one on top of another, including: a cylindrical yoke; and a plurality of radially protruding teeth arranged at a specified interval along a circumferential direction of the yoke, wherein each of the core plates includes a plurality of annularly-arranged split cores each having a yoke portion forming the yoke and a tooth portion protruding from the yoke portion and forming the teeth, the yoke portion including a first yoke section and a second yoke section extending different lengths at opposite lateral sides of the tooth portion.

It is possible to reduce iron loss with the stator core, the split core block, the stator manufacturing method, and the rotary electric machine disclosed herein.

### BRIEF DESCRIPTION OF THE DRAWINGS

Fig. 1 is a perspective view showing a stator core according to a preferred embodiment.
Fig. 2 is an explanatory view showing an annular core plate making up the N^{th} layer of the present stator core.
Fig. 3 is an explanatory view showing an annular core plate making up the N+1^{th} or N-1^{th} layer of the present stator core.
Fig. 4 is a partially cutaway exploded perspective view of the present stator core seen in a laminating direction.
Fig. 5A is an explanatory view of a laminated form of the present stator core seen from the outside of the stator core.
Fig. 5B is an explanatory view illustrating a magnetic path in the present stator core.
Fig. 6 is an explanatory view representing hysteresis loss in the present stator core and hysteresis loss in a comparative example.
Figs. 7A and 7B are schematic explanatory views illustrating stator manufacturing methods according to a preferred embodiment.
Fig. 8 is an explanatory view depicting a first step of a first stator manufacturing method.
Fig. 9A is an explanatory view showing the present stator core whose slot openings are kept in an open state.
Fig. 9B is an explanatory view showing the present stator core to which stator coils are mounted.
Fig. 10 is an explanatory view depicting a first step of a second stator manufacturing method.
Fig. 11 is an explanatory view showing one example of a motor provided with the present stator core.
Fig. 12 is a partially exploded perspective view showing a modified example of the present stator core.

### DESCRIPTION OF THE EMBODIMENTS

Embodiments of a stator core, a split core block, a stator manufacturing method and a rotary electric machine disclosed herein will now be described in detail with reference to the accompanying drawings which form a part hereof. However, the present invention is not limited to the following embodiments.

### (Stator Core)

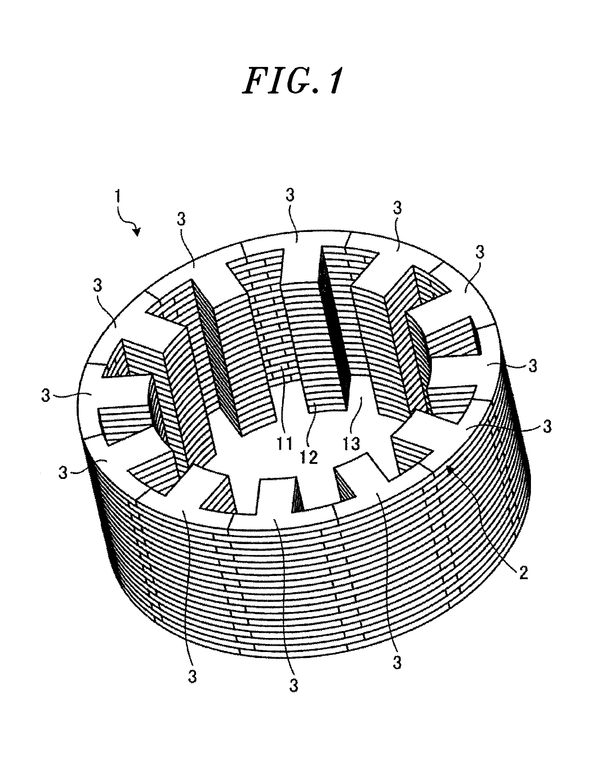

First, a stator core according to a preferred embodiment will be briefly described with reference to the accompanying drawings. Fig. 1 is a perspective view showing a stator core 1 according to a preferred embodiment.

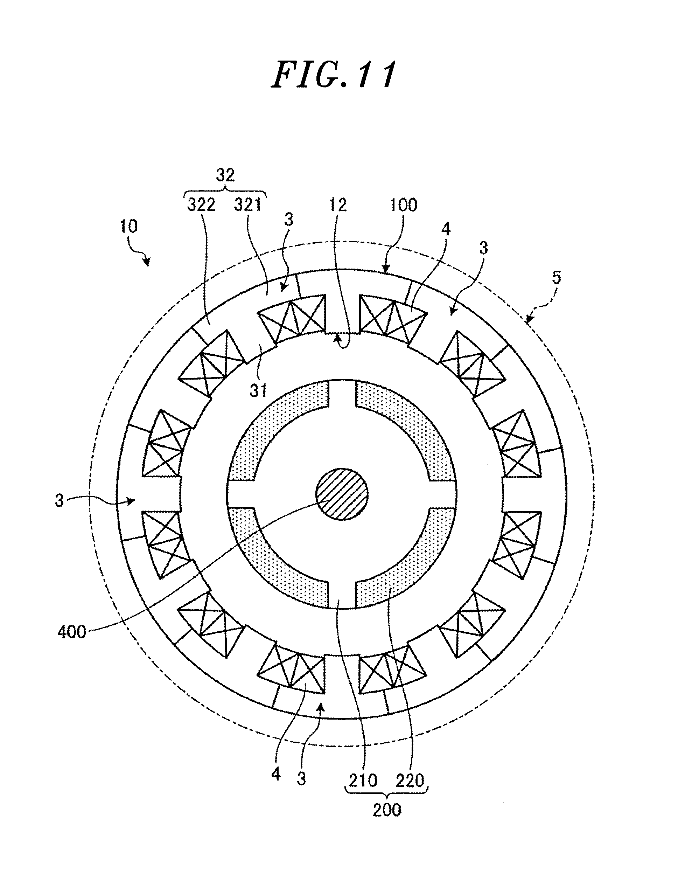

The stator core 1 according to the present embodiment is used in, e.g., a motor 10 (see Fig. 11) to be described later. As shown in Fig. 1, the stator core 1 is formed by laminating a plurality of annular metal-made core plates 2 one on top of another. The number of the core plates 2 thus laminated can be appropriately set depending on the desired characteristics. As shown in Fig. 1, the stator core 1 formed by laminating the core plates 2 includes a cylindrical yoke 11 and a plurality of inwardly-protruding teeth 12 arranged at a specified interval along the circumferential direction of the yoke 11.

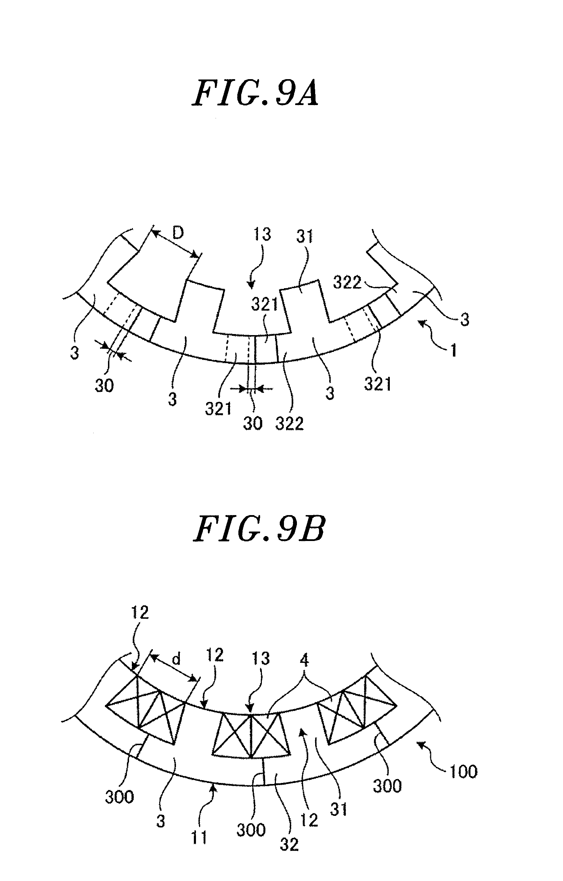

Using slot openings 13 formed between the teeth 12 adjoining each other, stator coils 4 are mounted to the respective teeth 12 as will be set forth later, thereby providing a stator 100 (see Fig. 9B).

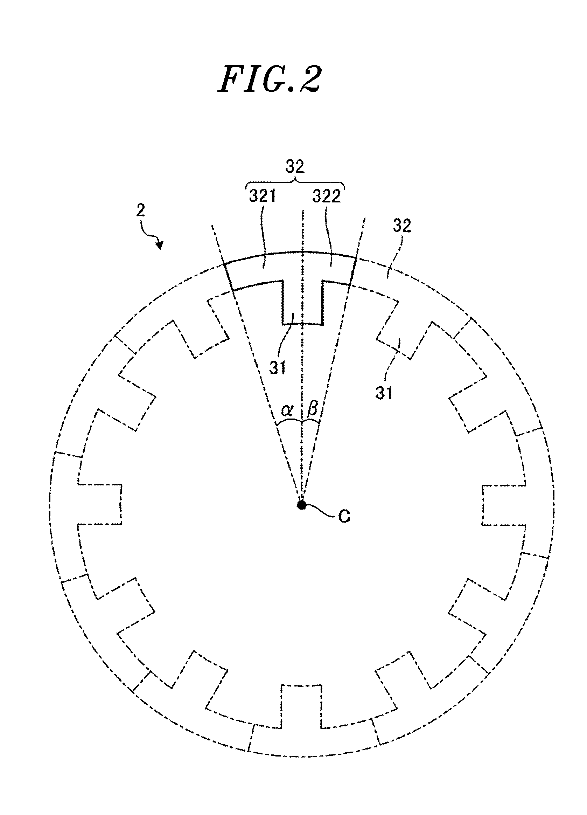

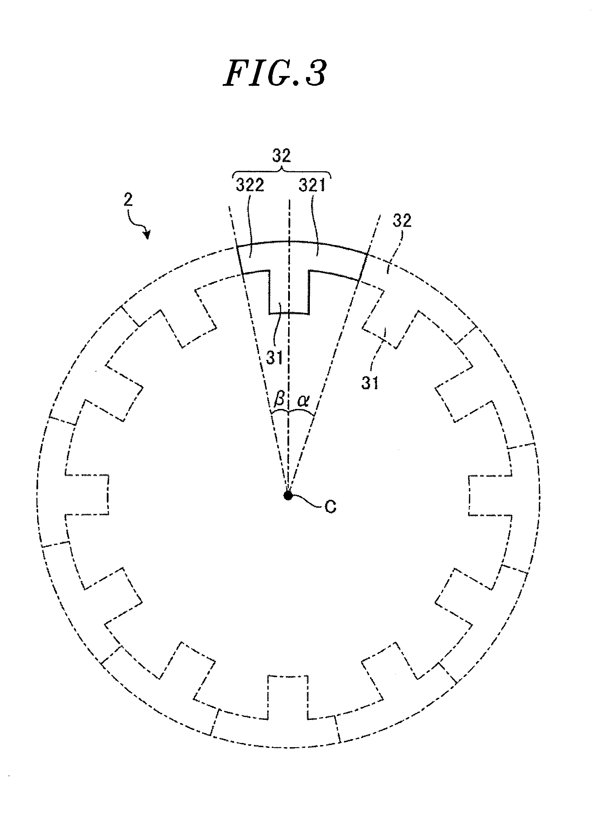

Referring to Figs. 2 and 3, each of the core plates 2 is configured to include a plurality of (e.g., twelve) annular split cores 3 each having a tooth portion 31 of a specified shape. In Figs. 2 and 3, reference symbol C designates an annulus center of the core plates 2 which becomes an imaginary center axis of the stator core 1.

As shown in Figs. 2 and 3, each of the split cores 3 according to the present embodiment includes a yoke portion 32 and a tooth portion 31 protruding from the yoke portion 32. When the core plates 2 are laminated one on top of another, the laminated yoke portions 32 of the split cores 3 make up the yoke 11. The laminated tooth portions 31 of the split cores 3 make up the teeth 12.

The yoke portion 32 of each of the split cores 3 includes a first yoke section 321 and a second yoke section 322 extending different lengths at opposite lateral sides of the tooth portion 31.

More specifically, the yoke portion 32 is composed of the first yoke section 321 and the second yoke section 322. The first yoke section 321 and the second yoke section 322 extend toward the left and right sides to have lengths defined by different angles α and β with respect to a centerline interconnecting the center of the tooth portion 31 and the annulus center C.

In the present embodiment, the first yoke section 321 is defined by angle α of 19 degrees to have a length larger than the length of the second yoke section 322. The second yoke section 322 is defined by angle β of 11 degrees to have a length smaller than the length of the first yoke section 321. Twelve split cores 3 are annularly arranged side by side in a state that the first yoke sections 321 and the second yoke sections 322 make contact with each other. This provides a core plate 2 in which twelve tooth portions 31 extend radially inward.

The core plates 2 are laminated one on top of another such that such that the first yoke section 321 and the second yoke section 322 of one of the vertically adjacent split cores 3 overlapping with each other extend circumferentially in an opposite direction to the first yoke section 321 and the second yoke section 322 of the other of the vertically adjacent split cores 3.

In other words, in the annular core plate 2 making up the N^{th} layer, as shown in Fig. 2, the first yoke section 321 extends counterclockwise and the second yoke section 322 extends clockwise.

As shown in Fig. 3, the annular core plate 2 making up the N+1^{th} or N-1^{th} layer superimposed with the N^{th} layer is in an upside down state with respect to the core plate 2 making up the N^{th} layer. More specifically, in the annular core plate 2 making up the N+1^{th} or N-1^{th} layer, the first yoke section 321 having a relatively larger length extends clockwise and the second yoke section 322 having a relatively smaller length extends counterclockwise.

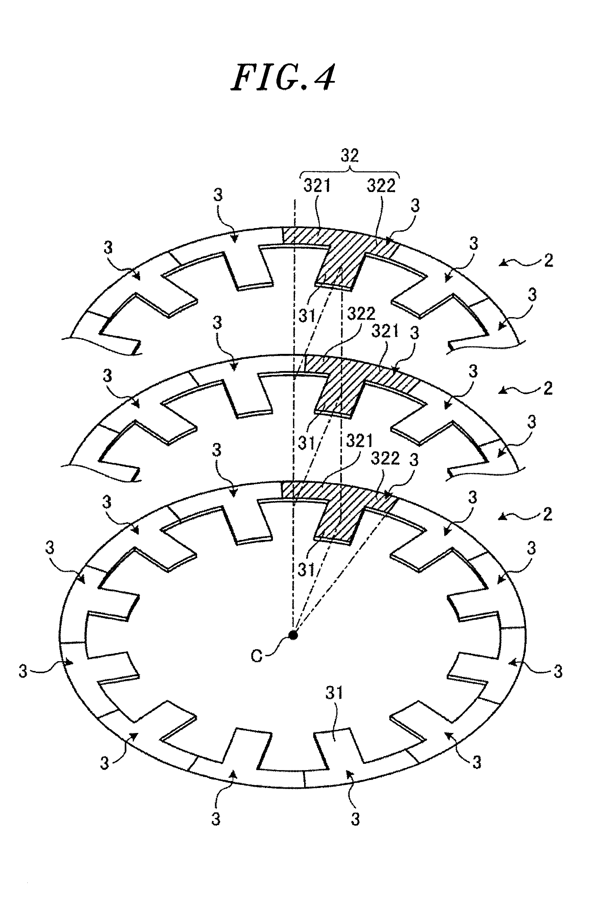

In the stator core 1 according to the present embodiment, as shown in Fig. 4, the core plates 2 are laminated one on top of another such that the first yoke section 321 and the second yoke section 322 of one of the vertically adjacent split cores 3 overlapping with each other extend circumferentially in an opposite direction to the first yoke section 321 and the second yoke section 322 of the other of the vertically adjacent split cores 3.

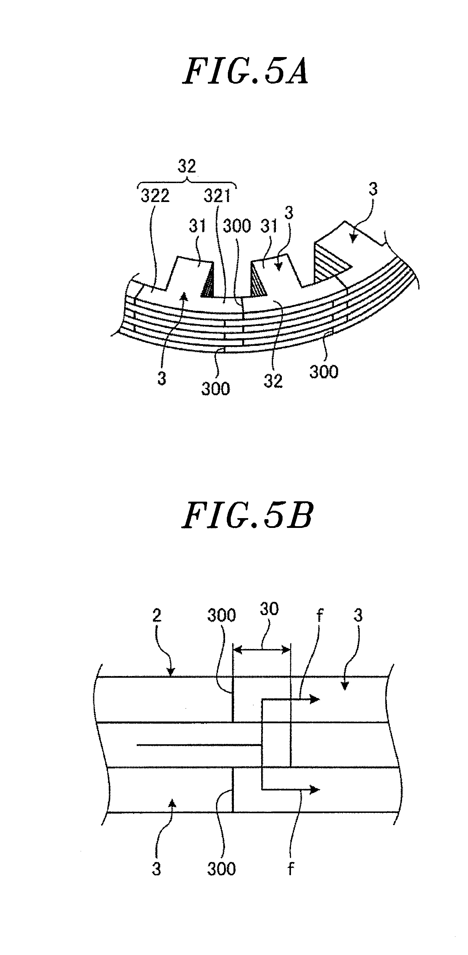

Referring to Figs. 5A and 5B, the respective split cores 3 are laminated such that abutting portions 300 of the first yoke sections 321 and the second yoke sections 322 are arranged in a staggering pattern along a laminating direction. Accordingly, as shown in Fig. 5B, an overlap 30 having a specified length is defined between the abutting portions 300 of the superimposed split cores 3.

In the core plates 2 of the present embodiment described above, the split cores 3 are annularly arranged such that the end of the first yoke section 321 and the end of the second yoke section 322 of the adjoining split cores 3 face each other. When the core plates 2 are laminated, the centers of the tooth portions 31 are superimposed with one another as shown in Fig. 4. The yoke portions 32 are superimposed as shown in Fig. 5A in a state where the first yoke section 321 and the second yoke section 322 overlap with each other (see Fig. 5B).

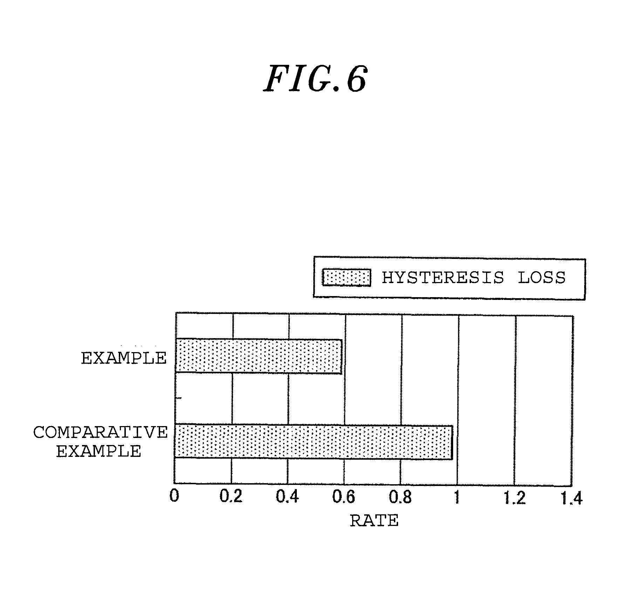

With the stator core 1 of the present embodiment configured as above, as indicated by an arrow f in Fig. 5B, a magnetic path is three-dimensionally formed along an up-down direction of the abutting portions 300. However, this does not mean that there is formed no magnetic path other than the magnetic path indicated by the arrow f. In the conventional stator core 1 formed by the split cores 3, iron loss becomes larger because the abutting portions 300 impede the flow of magnetic fluxes. In the stator core 1 of the present embodiment, however, the magnetic path is three-dimensionally formed. Therefore, as shown in Fig. 6, it is possible in the example to reduce hysteresis loss by about 40% as compared with the comparative example. This makes it possible to reduce iron loss which is indicated by the sum of hysteresis loss and current loss. The comparative example shown in Fig. 6 refers to a stator core in which a plurality of split cores is connected by, e.g., caulking.

Use of the stator core 1 configured as above makes it easy to mount the stator coils 4 (see Fig. 9B) to the teeth 12. Moreover, it is possible to increase the space factor of the stator coils 4 and to enhance the electric loading.

### (Stator Manufacturing Method)

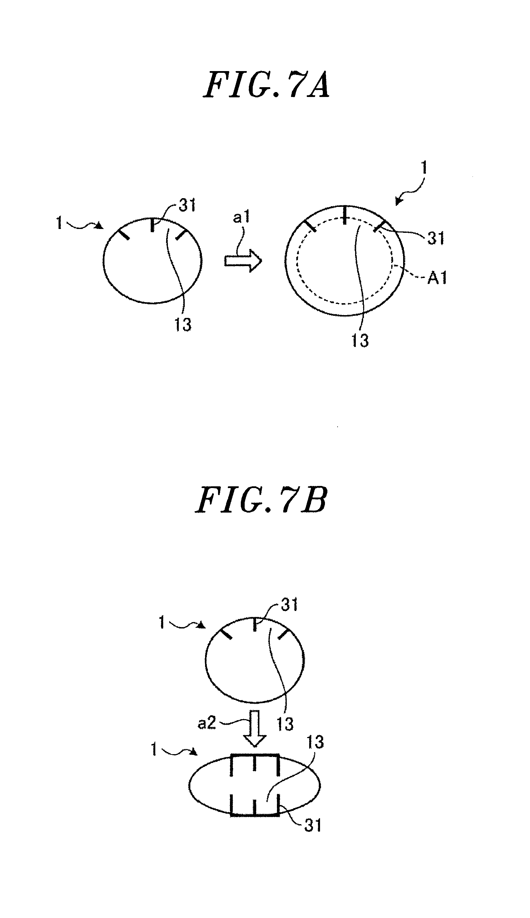

Next, methods of manufacturing a stator 100 provided with the aforementioned stator core 1 will be described with reference to Figs. 7A through 9B.

The stator core 1 can be manufactured by two methods as shown in Figs. 7A and 7B. In a first method, as indicated by an arrow a1 in Fig. 7A, all the split cores 3 of the respective core plates 2 making up the stator core 1 shown in Fig. 1 are moved radially outward to enlarge the slot openings 13. Then, the stator coils 4 are mounted to the teeth 12. Reference symbol A1 indicates the contour of the core plates 2 which are not yet enlarged.

In a second method, as indicated by an arrow a2 in Fig. 7B, a plurality of, e.g., three, circumferentially-adjoining groups of the split cores 3 of the respective core plates 2 making up the stator core 1 shown in Fig. 1 are moved so as to make a substantially straight line, thereby enlarging the slot openings 13. Then, the stator coils 4 are mounted to the teeth 12. In this case, the stator coils 4 can be mounted to all the teeth 12 by sequentially changing the groups of the split cores 3 to be moved.

The first and second methods make use of the overlap 30 defined between the abutting portions 300 of the overlapping split cores 3 of the stator core 1 as shown in Fig. 5B. In other words, the slot openings 13 formed between the teeth 12 are enlarged as the split cores 3 are moved so as to reduce the overlap 30 of the yoke portions 32 superimposed along the laminating direction.

Each of the core plates 2 is formed by punching a specified steel plate into twelve split cores 3 through the use of a mold device (not shown) and then annularly arranging the twelve split cores 3 thus punched.

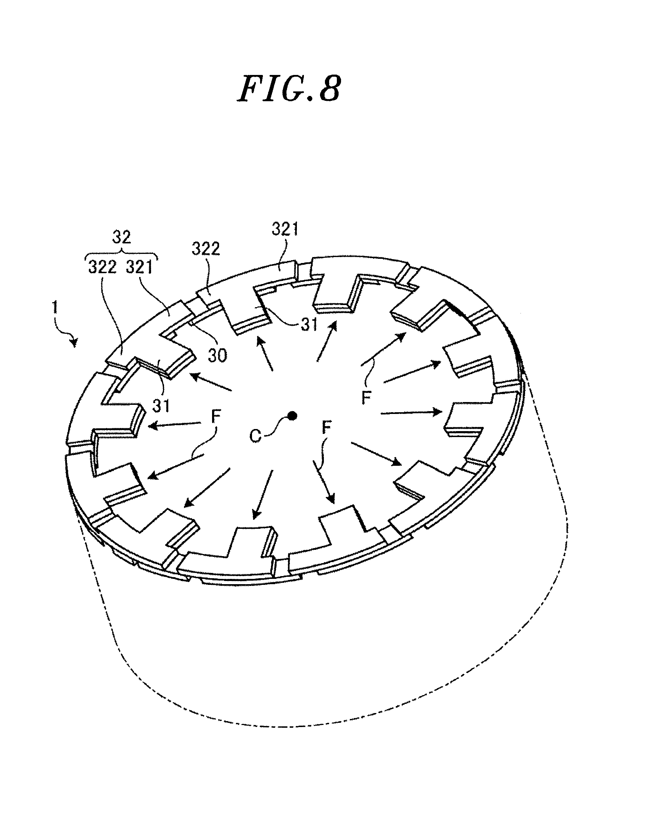

For example, with the first method of manufacturing the stator core 1, the stator core 1 formed by laminating the core plates 2 is expanded radially outward away from the annulus center C (in the direction indicated by arrows F) without destroying the overlap 30, as shown in Fig. 8. In other words, all the split cores 3 making up the core plates 2 are moved radially outward, thereby reducing the overlap 30 of the yoke portions 32 superimposed in the laminating direction and enlarging the slot openings 13.

This moving work can be performed through the use of a specified jig (not shown). As shown in Fig. 9A, if the respective split cores 3 are moved radially outward to thereby reduce the overlap 30 between the superimposed split cores 3, the slot openings 13 defined between the teeth 12 are enlarged to have a dimension D. In this manner, the overlap 30 is reduced but is not destroyed. For this reason, there is no likelihood that the respective split cores 3 come apart from one another and the core plates 2 get out of the annular shape. Accordingly, the stator core 1 formed by laminating the core plates 2 is kept cylindrical.

The stator coils 4 (see Fig. 9B) are mounted into the slot openings 13 thus enlarged. Thereafter, the split cores 3 are returned to the original positions. Thus, the slot openings 13 are reduced to have the original dimension d as shown in Fig. 9B.

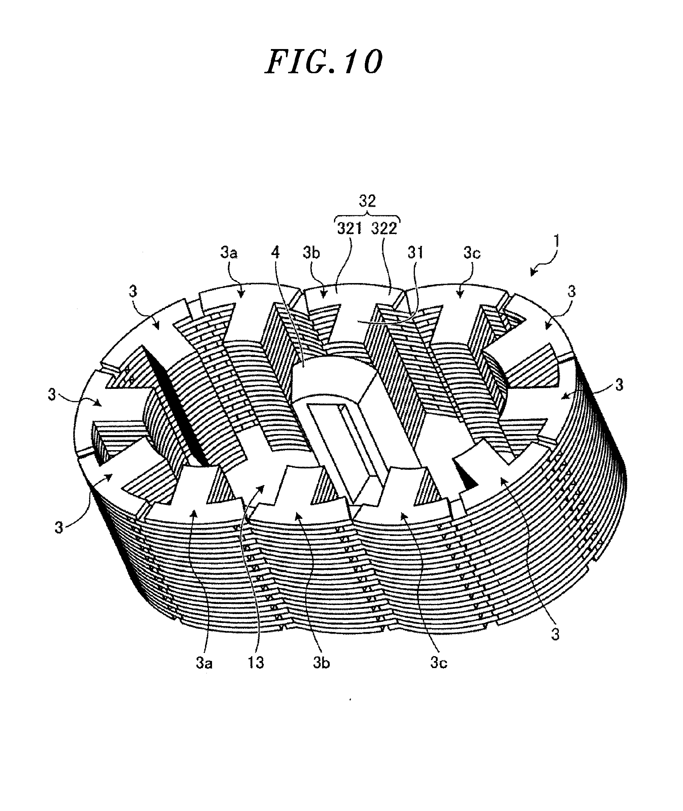

In order to obtain a high space factor, a pressed coil wound by a predetermined number of turns in accordance with the volumes of the teeth 12 and the slot openings 13 and encapsulated by a resin or insulated by an insulating sheet may be used as each of the stator coils 4 (see Fig. 10).

By enlarging the slot openings 13 in this manner, it is possible to easily mount the stator coils 4 formed of coils having a high space factor. It is also possible to enhance the electric loading and to increase the manufacturing efficiency of the stator 100.

On the other hand, with the second manufacturing method, as shown in Fig. 10, the split cores 3 making up the core plates 2 are moved such that at least three mutually-adjoining split cores 3a, 3b and 3c are arranged side by side along a substantially straight line, thereby enlarging the slot openings 13. In this case, the overlap 30 of the yoke portions 32 of three split cores 3a, 3b and 3c superimposed along the laminating direction is also reduced. As shown in Fig. 10, three split cores 3a, 3b and 3c facing the opposite three split cores 3a, 3b and 3c are arranged side by side along a substantially straight line. Therefore, the stator core 1 is deformed into a substantially racetrack-like shape. In this case, the moving work of the split cores 3a, 3b and 3c can be performed through the use of a specified jig (not shown). The end portions of the first yoke sections 321 and the second yoke sections 322 may be chamfered or may be changed to an appropriate shape so that, when three split cores 3a, 3b and 3c are moved, the end portions of the first yoke sections 321 and the second yoke sections 322 should not interfere with one another.

The stator coil 4 is mounted into the slot openings 13 thus enlarged. Thereafter, the split cores 3 are returned to the original positions. In a similar manner, the remaining split cores 3 not yet mounted with the stator coils 4 are moved such that three split cores 3a, 3b and 3c arranged side by side along a substantially straight line face the opposite three split cores 3a, 3b and 3c. The stator coil 4 is mounted into the slot openings 13 thus enlarged. Thereafter, the split cores 3 are returned to the original positions, thereby closing the respective slot openings 13.

The method of manufacturing the stator 100 described above includes a core plate forming step, a core plate laminating step and a coil mounting step.

In the core plate forming step, a plurality of split cores 3 each having a protruding tooth portion 31 is annularly arranged to form annular core plates 2 (see Figs. 2 and 3) in which the tooth portions 31 are arranged side by side at a specified interval.

In the core plate laminating step, the core plates 2 formed in the core plate forming step are laminated one on top of another. At this time, the centers of the tooth portions 31 of the split cores 3 are superimposed with one another. The first yoke sections 321 and the second yoke sections 322 of the yoke portions 32 are superimposed with one another so as to form an overlap 30 (see Fig. 5B).

In the coil mounting step, the stator coils 4 are mounted to the teeth 12 of the stator core 1 assembled in the core plate laminating step. At this time, the split cores 3 are moved so as to reduce the overlap 30 of the yoke portions 32 superimposed along the laminating direction. Conversely, the slot openings 13 formed between the teeth 12 are enlarged. As stated above, the slot openings 13 can be enlarged by moving the respective split cores 3 of the core plates 2 radially outward or by moving at least three mutually-adjoining split cores 3a, 3b and 3c of the core plates 2 so that the split cores 3a, 3b and 3c can be arranged side by side along a substantially straight line.

As set forth above, each of the split cores 3 includes the yoke portion 32 and the tooth portion 31 protruding from the yoke portion 32. The yoke portion 32 includes the first yoke section 321 and the second yoke section 322 extending different lengths at opposite lateral sides of the tooth portion 31.

The stator coils 4 are mounted to the teeth 12 through the use of the slot openings 13 thus enlarged. Then, the enlarged slot openings 13 are returned to the original states, thereby obtaining a stator 100 (see Fig. 9B).

The stator core 1 of the stator 100 manufactured in this manner has a structure in which the core plates 2 formed of the split cores 3 are laminated one on top of another. However, the split cores 3 are not connected to one another by caulking or the like. For this reason, there is no likelihood that iron loss becomes larger. Thus, the stator core 1 of the present embodiment is equivalent in performance to the laminated core formed of one-piece-type core plates not employing the split cores 3.

### (Rotary Electric Machine)

Next, description will be made on a case where the stator 100 including the stator core 1 described above is applied to, e.g., a three-phase synchronous motor (hereinafter just referred to as "motor 10") as a rotary electric machine. Fig. 11 is an explanatory view showing one example of the motor 10 provided with the stator 100.

As shown in Fig. 11, the motor 10 includes a cylindrical case 5, the aforementioned stator 100 arranged within the case 5 and a cylindrical rotor 200 arranged inside the stator 100 with a specified space left between the stator 100 and the rotor 200.

The rotor 200 has a laminated structure formed by laminating a plurality of rotor plates one on top of another. Four salient poles 210 are formed on the outer circumferential surface of the rotor 200 at an interval of, e.g., 90 degrees. Permanent magnets 220 are arranged between the salient poles 210. A rotating shaft 400 is fitted to the center of the rotor 200 and is rotatably supported on the case 5.

As described above, the stator 100 includes the stator core 1 (see Fig. 1) formed by laminating a plurality of core plates 2 one on top of another, and the stator coils 4 mounted to the teeth 12 of the stator core 1. Each of the core plates 2 is formed by annularly arranging twelve split cores 3. Each of the split cores 3 includes the yoke portion 32 and the tooth portion 31 protruding from the yoke portion 32. The yoke portion 32 includes the first yoke section 321 and the second yoke section 322 extending different lengths at opposite lateral sides of the tooth portion 31.

In the laminated core plates 2, the first yoke section 321 and the second yoke section 322 of one of the vertically adjacent split cores 3 overlapping with each other extend in an opposite direction to the first yoke section 321 and the second yoke section 322 of the other of the vertically adjacent split cores 3.

In the core plates 2, the split cores 3 are annularly arranged such that the end of the first yoke section 321 and the end of the second yoke section 322 of the adjoining split cores 3 face each other. When the core plates 2 are laminated, the centers of the tooth portions 31 are superimposed with one another. The yoke portions 32 are superimposed so that the first yoke sections 321 and the second yoke sections 322 can form an overlap 30.

With the configuration described above, if an electric current flows through the stator coils 4, revolving magnetic fields are generated inside the stator 100. The rotor 200 is rotated by the interaction of the revolving magnetic fields thus generated and the magnetic fields generated by the permanent magnets 220 of the rotor 200. The rotating shaft 400 is rotated together with the rotor 200, thereby serving as the motor 10.

With the motor 10 of the present embodiment, it is possible to reduce iron loss in the stator 100 and to increase the efficiency of the motor 10 as a rotary electric machine. Since the stator core 1 making up the stator 100 is configured such that the split cores 3 can be moved so as to reduce the overlap 30 of the yoke portions 32 of the split cores 3 superimposed along the laminating direction, it is possible to enlarge the slot openings 13 formed between the teeth 12. This makes it easy to mount the stator coils 4, thereby increasing the manufacturing efficiency. Moreover, it is possible to significantly increase the space factor of the stator coils 4. This assists in enhancing the electric loading.

While one preferred embodiment of the present invention has been described above, the number of the split cores 3 employed in the stator core 1 of the stator 100 may be appropriately set as long as each of the split cores 3 includes the tooth portion 31 and the yoke portion 32 and as long as the yoke portion 32 includes the first yoke section 321 and the second yoke section 322 extending in different lengths at the opposite lateral sides of the tooth portion 31. Furthermore, the length of the first yoke section 321 and the length of the second yoke section 322 may be set appropriately. In addition, the rotor 200 is not limited to the one described above.

While each of the split cores 3 is provided with a single tooth portion 31 in the aforementioned embodiment, a plurality of (e.g., two) tooth portions 31 may be arranged side by side in the yoke portion 32.

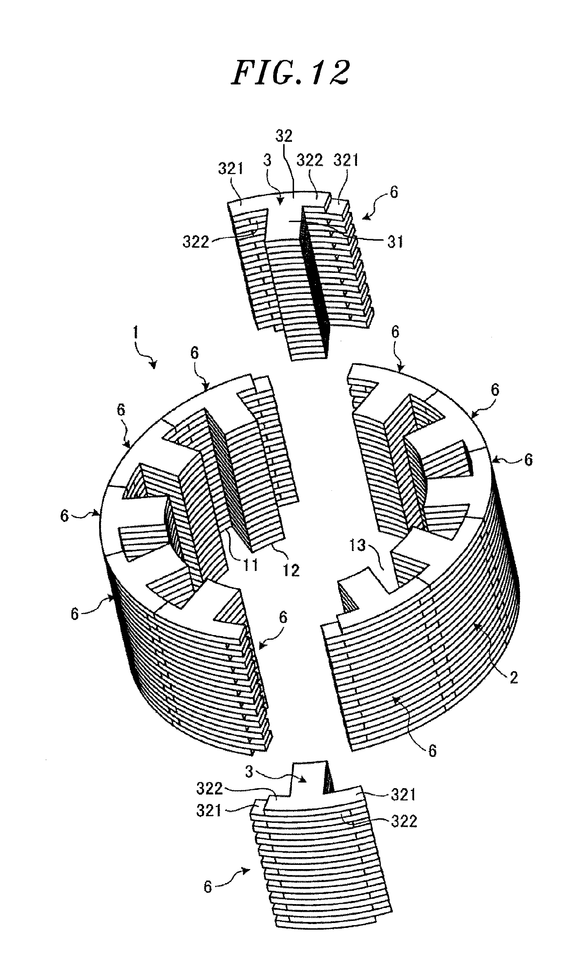

The stator core 1 described above is formed by laminating a plurality of annular core plates 2 one on top of another. Alternatively, the stator core may include split core blocks formed by laminating a plurality of split cores 3 each having the yoke portion 32 and the tooth portion 31 protruding from the yoke portion 32. In this case, the yoke portion 32 includes the first yoke section 321 and the second yoke section 322 extending different lengths at the opposite lateral side of the tooth portion 31. The first yoke section 321 and the second yoke section 322 of one of the vertically adjacent split cores 3 overlapping with each other extend in opposite directions to the first yoke section 321 and the second yoke section 322 of the other of the vertically adjacent split cores 3. When each of the split core blocks is fabricated, the yoke portions 32 and the tooth portions 31 of the split cores 3 make up the yoke 11 of the stator core 1 and the teeth 12 of the stator core 1 protruding from the yoke 11. For example, as shown in Fig. 12, a cylindrical stator core 1 can be formed by annularly combining split core blocks 6 each having a plurality of split cores 3. Fig. 12 is a partially exploded perspective view showing a modified example of the stator core 1.

As shown in Fig. 12, the stator core 1 is formed of a plurality of split core blocks 6. The stator core 1 includes a cylindrical yoke 11 and a plurality of radially protruding teeth 12 arranged at a specified interval along the circumferential direction of the yoke 11. In other words, the yoke 11 and the teeth 12 protruding from the yoke 11 at a specified interval can be formed by combining the split core blocks 6.

Each of the split core blocks 6 is formed by laminating the aforementioned split cores 3, each of which includes the tooth portion 31 forming the teeth 12 and the yoke portion 32 forming the yoke 11.

In the split core blocks 6, the yoke portion 32 of each of the split cores 3 laminated one on top of another includes the first yoke section 321 and the second yoke section 322 extending different lengths at opposite lateral sides of the tooth portion 31. The first yoke section 321 and the second yoke section 322 of one of the vertically adjacent split cores 3 overlapping with each other extend in an opposite direction to the first yoke section 321 and the second yoke section 322 of the other of the vertically adjacent split cores 3.

Other modified examples of the aforementioned embodiment and other effects can be readily derived by those skilled in the art. For this reason, the broad aspect of the present disclosure is not limited to the specific disclosure and the representative embodiment shown and described above. Accordingly, the embodiment of the present invention can be modified in many different forms without departing from the spirit and scope defined by the appended claims and the equivalents thereof.

For example, the rotary electric machine may be an electric generator although the motor 10 has been described as one example of the rotary electric machine. In this case, the electric generator is formed by winding rotor coils around the rotor 200 and is operated in the opposite manner to the motor 10. In other words, the rotor 200 is rotated together with the rotating shaft 400, thereby generating an electric current in the rotor coils of the rotor 200. Moreover, a linear motor may be formed by arranging the split core blocks 6 along a straight line.

The specific shapes of the respective components may differ from those shown in the respective figures of the subject application. The respective components of the embodiments and the modified examples described above may be appropriately combined unless a conflict arises.

## Claims

1. A stator core formed by laminating a plurality of annular core plates one on top of another, comprising:
a cylindrical yoke; and
a plurality of radially protruding teeth arranged at a specified interval along a circumferential direction of the yoke,
wherein each of the core plates includes a plurality of annularly-arranged split cores each having a yoke portion forming the yoke and a tooth portion protruding from the yoke portion and forming the teeth, the yoke portion including a first yoke section and a second yoke section extending different lengths at opposite lateral sides of the tooth portion.

2. The stator core of claim 1, wherein the core plates are laminated one on top of another such that the first yoke section and the second yoke section of one of the vertically adjacent split cores overlapping with each other extend in opposite directions to the first yoke section and the second yoke section of the other of the vertically adjacent split cores.

3. The stator core of claim 1 or 2, wherein the split cores of each of the core plates are annularly arranged such that an end of the first yoke section of one of the split cores faces an end of the second yoke section of the other of the split cores adjoining said one of the split cores and wherein, when the core plates are laminated one on top of another, the centers of the tooth portions of the split cores are superimposed with one another and the yoke portions of the split cores are superimposed in a state that the first yoke section and the second yoke section overlap with each other.

4. A split core block formed by laminating a plurality of split cores one on top of another, each of the split cores including a yoke portion and a tooth portion protruding from the yoke portion, wherein:
the yoke portion includes a first yoke section and a second yoke section extending different lengths at opposite lateral sides of the tooth portion;
the split cores are laminated and superimposed such that the first yoke sections and the second yoke sections of the vertically adjacent split cores overlapping with each other extend in opposite directions to the first yoke section and the second yoke section of the other of the vertically adjacent split cores; and
the yoke portion and the tooth portion are respectively configured to form a yoke of a stator core and teeth of the stator core protruding from the yoke at a specified interval.

5. A stator manufacturing method, comprising:
a core plate forming step for forming annular core plates by annularly arranging a plurality of split cores each having a tooth portion such that the tooth portions of the split cores are arranged side by side at a specified interval;
a core plate laminating step for laminating the core plates formed in the core plate forming step one on top of another to produce a stator core having teeth; and
a coil mounting step for mounting stator coils to the teeth of the stator core produced in the core plate laminating step,
wherein each of the split cores includes a yoke portion from which the tooth portion protrudes, the yoke portion including a first yoke section and a second yoke section extending different lengths at opposite lateral sides of the tooth portion,
the core plate laminating step includes superimposing the tooth portions of the split cores and superimposing the yoke portions of the split cores such that the first yoke sections and the second yoke sections overlap with each other to form an overlap, and
the coil mounting step includes enlarging slot openings formed between the teeth of the stator core by moving the split cores so as to reduce the overlap of the yoke portions superimposed in a laminating direction.

6. The method of claim 5, wherein the coil mounting step includes enlarging the slot openings by moving the split cores radially outward.

7. The method of claim 5, wherein the coil mounting step includes enlarging the slot openings by moving at least three of the split cores adjoining one another such that the split cores are arranged side by side along a substantially straight line.

8. A rotary electric machine, comprising:
the stator core of any one of claims 1 to 3; and
a rotor rotatably arranged inside the stator core with a specified gap left between the stator core and the rotor.

9. A rotary electric machine, comprising:
a stator core including the split core block of claim 4; and
a rotor rotatably arranged inside the stator core with a specified gap left between the stator core and the rotor.
